(19) **Europäisches Patentamt / European Patent Office / Office européen des brevets**

(11) **EP 4 589 360 A1**

(12) # EUROPEAN PATENT APPLICATION
published in accordance with Art. 153(4) EPC

(43) Date of publication:
**23.07.2025 Bulletin 2025/30**

(21) Application number: **23880043.7**

(22) Date of filing: **19.09.2023**

(51) International Patent Classification (IPC):
*G02B 27/00* (2006.01)    *G06T 19/00* (2011.01)
*G06T 15/00* (2011.01)    *G06V 40/18* (2022.01)
*G02B 30/00* (2020.01)    *B60K 35/00* (2024.01)
*G02B 27/01* (2006.01)

(52) Cooperative Patent Classification (CPC):
**B60K 35/00; G02B 27/00; G02B 27/01;
G02B 30/00; G06T 15/00; G06T 19/00; G06V 40/18**

(86) International application number:
**PCT/KR2023/014123**

(87) International publication number:
**WO 2024/085464 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2022 KR 20220135455**

(71) Applicant: Epitone, Inc.
**San Diego, California 92122 (US)**

(72) Inventors:
• **YANUSIK, Igor**
  **Incheon 22002 (KR)**
• **KIM, Seong Bok**
  **Seoul 07023 (KR)**
• **KWON, Se Yong**
  **Incheon 21982 (KR)**
• **LEE, Jin Ho**
  **Suwon-si Gyeonggi-do 16701 (KR)**

(74) Representative: **RGTH
Patentanwälte PartGmbB
Neuer Wall 10
20354 Hamburg (DE)**

(54) **THREE-DIMENSIONAL AUGMENTED REALITY HEAD-UP DISPLAY DEVICE**

(57)    The present invention relates to a three-dimensional augmented reality head-up display device, and more particularly to a three-dimensional (3D) augmented reality (AR) head-up display (HUD) device that can greatly expand the field of view (FoV) while significantly reducing the volume of the device. According to the present invention, a three-dimensional augmented reality head-up display device projects a large display panel image directly onto a vehicle windshield without using an optical mirror, in contrast to a conventional head-up display device that uses an optical mirror to magnify a small display panel image, and thus facilitates implementing a wide field of view with minimal increase in the volume of the device and may further expand the field of view by increasing the size of a display panel or increasing the number of display panels.

Fig. 1

**Description**

**TECHNICAL FIELD**

The disclosure relates to a three-dimensional augmented reality head-up display device and, more particularly, to a three-dimensional (3D) augmented reality (AR) head-up display (HUD) device capable of significantly expanding the field of view (FoV) while significantly reducing the volume of the device.

**BACKGROUND ART**

Head-up display (HUD) devices have seen a significant increase in application to improve driver safety and comfort while driving. HUD devices display instrument panel information such as vehicle speed, fuel level, engine revolutions per minute, and navigation information. In addition to this information, more diverse information may be provided by applying augmented reality.

For example, a lane movement direction, hazardous objects, pedestrian locations, upcoming building information, and the like may be represented to match objects or the foreground. However, this requires that the virtual image distance represented be large enough to cover the viewing distance during driving and that the field of view (FoV) be large enough to cover the width of the lane.

However, conventional HUD devices display a virtual image at a fixed distance (typically 2.5 meters) and have a small horizontal FoV of less than 5 degrees. Recently, devices have been prototyped or released, in which such problems are reduced by increasing the virtual image distance to 10 meters and the horizontal FoV to 10 degrees.

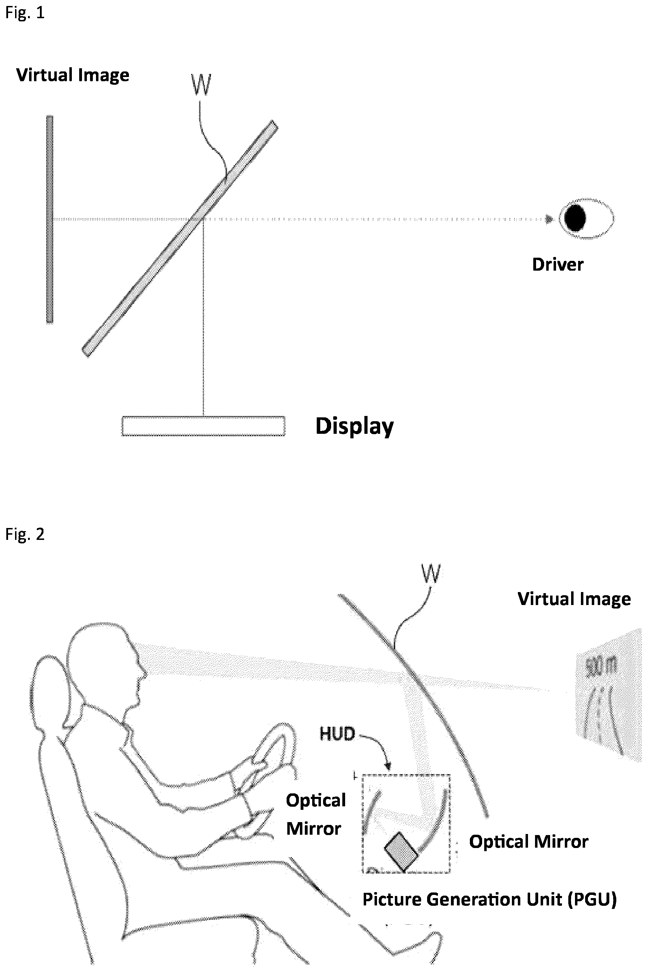

FIG. 1 is a view illustrating the principle of realizing the virtual image using a transparent glass (e.g., a windshield). The virtual image is formed on the outer portion of the windshield at a distance equal to the distance between the display and the windshield W. Therefore, the virtual image distance (VID) cannot be increased without the use of a magnifying optical mirror. In addition, because the image is displayed as a virtual image through the transparent glass, the driver can also see a real object on the other side of the glass (or the windshield) at the same time.

FIG. 2 is a configuration view of a conventional HUD device. A two-dimensional (2D) image generated by a picture generation unit (PGU) including a display panel and a back light unit disposed below the display panel is magnified and distortion-corrected using two optical mirrors and projected onto the windshield to form a virtual image (or illusion) in front of the driver.

Because such conventional HUD devices use 2D images, even if a virtual image is set to be further away using magnifying optical mirrors, the virtual image is fixed in a single location.

In addition, the limited magnification ratios of optical mirrors may also limit increases in virtual image distance.

In addition, increasing the FoV requires an increase in the size of the magnifying optical mirrors, which causes the device to be significantly bulky, and a space for mounting in the vehicle is an issue.

In addition, the intensity of sunlight concentration increases as the optical magnification ratio increases, which leads to the emerging issue of long-term reliability of the display panel. In addition, the fixed virtual image distance, i.e., the fixed depth of image representation, may also limit the realization of true augmented reality in which the depth of information displayed is perfectly matched to an object in front of the vehicle or the foreground.

However, in the configuration of the disclosure, even if a virtual image is formed at a short distance, by realizing a three-dimensional (3D) image on the virtual image plane, the same effect as greatly increasing the virtual image distance may be obtained. In addition, the image may be freely displayed at various distances, which is significantly suitable for augmented reality representation.

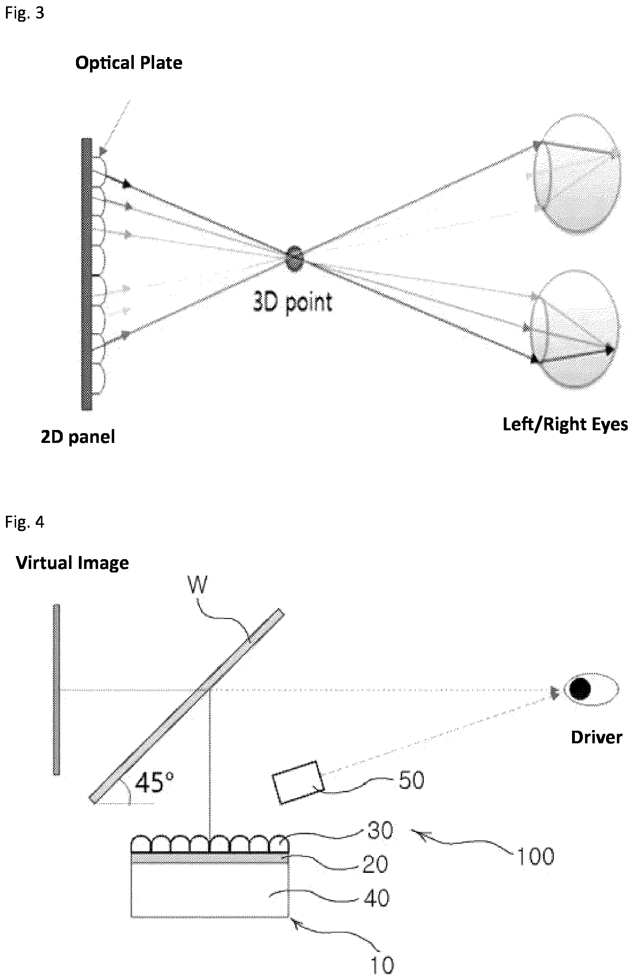

In a 3D image display device, an optical plate including a lenticular lens film or a parallax barrier film is attached to the upper portion of a 2D image display device to divide light generated by each pixel of a 2D image display device, such as an LCD, to the left and right eyes, as shown in FIG. 3. Thereafter, when the left and right images are applied to each pixel at a time-differential interval, the user may see a 3D image.

**DISCLOSURE**

**Technical Problem**

Accordingly, the disclosure has been made in consideration of the above-described problems occurring in the related art, and a three-dimensional (3D) augmented reality (AR) head-up display (HUD) device according to the disclosure projects a large display panel image directly onto the windshield of a vehicle without using an optical mirror, unlike conventional HUD devices each of which uses an optical mirror to magnify an image from a small display panel image. Accordingly, the field of view (FoV) may be greatly increased while minimizing increases in the volume of the device.

In addition, the viewing angle may be further increased by simply increasing the size of the display panel or increasing the number of display panels. Another objective is to increase the viewing angle without significantly increasing the volume of the device, and to prevent long-term reliability issues due to sunlight concentration.

**Technical Solution**

In order to achieve at least one of the above objectives, according to the disclosure, provided is a 3D VR HUD device including:

a 3D image display device including an LCD panel, an optical plate attached to an upper portion of the LCD panel, and a backlight unit disposed under the LCD panel; and
an eye-tracking camera disposed in a direction facing toward a driver.

The eye-tracking camera may be disposed in a dashboard of a vehicle in a position facing toward eyes of the driver and separated from the 3D image display device.

The backlight unit may include an LED, a collimating lens array, and a diffuser, and may be configured such that a maximum exitance angle of an LED light source at an edge of a display matches a field of view at a center of an eye box.

The backlight unit may be disposed such that a relative position of each of the LED light sources with respect to a corresponding lens unit is gradually shifted from the center to an edge.

The backlight unit may be configured such that a Fresnel lens is inserted into a top portion of the lens array.

A focal length of the Fresnel lens may be equal to a virtual image distance.

In the backlight unit, an angle control film may be disposed between the LCD panel and the diffuser.

In the 3D image display device, a half-wave plate may be disposed and joined between the optical plate and the LCD panel.

The 3D image display device may have a box shape, with a dust cover being disposed on a top portion of the 3D image display device.

The dust cover may have a curved surface shape which does not directly face the driver and is disposed in response to an angle of a windshield.

The 3D image display device may include a case configured to cover a display so that the display is not directly visible to the driver.

The 3D image display device may be configured such that the at least two LCD panels are connected.

The 3D image display device may be disposed on at least one of a driver's seat, a front passenger's seat, or a portion between the driver's seat and the front passenger's seat.

The 3D image display device may be configured such that a disposition position and a disposition angle thereof are adjustable in response to an angle and a shape of a windshield to realize a virtual image as a vertically oriented rectangular image.

The 3D image display device may be configured such that a display is disposed horizontally in a dashboard in a case in which a flat windshield is disposed at an angle of 45 degrees.

The 3D image display device may be configured such that a display is inclined inwardly of a surface of a flat windshield in a case in which an angle of the flat windshield is greater than 45 degrees.

The 3D image display device may be configured such that a display is inclined outwardly of a surface of a flat windshield in a case in which an angle of the flat windshield is less than 45 degrees.

The 3D image display device may be configured such that left and right side portions of a display are disposed rotated outwardly of a surface of a curved windshield.

The 3D image display device may be configured such that left and right side portions of a display are rotated vertically in a case in which a curved windshield is provided.

The 3D image display device may be configured such that a display is inclined inwardly of a surface of a curved windshield in a case in which an angle of the curved windshield is greater than 45 degrees.

The 3D image display device may be configured such that left and right side portions of a display are inclined outwardly of a surface of a curved windshield in a case in which an angle of the curved windshield is less than 45 degrees.

The 3D image display device may be configured to correct an input image to realize a virtual image as a vertically oriented rectangular image.

The 3D image display device may be configured for further rendering correction for left and right images by calculating paths of light beams emitted from pixels of the LCD panel through the optical plate and striking and reflected by a surface of a windshield.

The 3D image display device may be configured to render 3D images by calculating exact paths for successive eye positions and display pixel positions using a polynomial model having 3D eye position coordinates of the driver and the display pixel positions as inputs and beam paths represented by view numbers as outputs.

The 3D image display device may be configured such that paths of light beams are calculated by constructing a look-up table calculate and interpolating a value therebetween.

The 3D image display device may be configured such that in a case in which at least two LCD panels are used, a position and an angle of each of the LCD panels are adjustable according to a shape and a disposition location of a windshield.

**Advantageous Effects**

According to the disclosure, unlike conventional HUD devices which use optical mirrors to magnify a small display panel image, the 3D AR HUD device may project a large display panel image directly onto the windshield of a vehicle without using optical mirrors, thereby making it significantly easy to realize a wide viewing angle, and the viewing angle may be further increased by increasing the size of the display panel or increasing the number of display panels.

In order to realize augmented reality, it is necessary to form a virtual image distance to be distant to match an object in front of a vehicle or the foreground. Because the virtual image is formed on the outer portion of the windshield at a distance equal to the distance between the display and the windshield, it is not possible to express the virtual image distance to be distant without a magnifying optical mirror. The disclosure overcomes this problem using a 3D image representation method, and may freely display an image at a long distance and at various depths despite a short virtual image distance.

The HUD device of the disclosure may also realize a virtual image in the form of a vertically oriented rectangle without significant distortion without using an aspherical optical mirror commonly used for distortion correction by adjusting the disposition position and disposition angle by reflecting the shape and angle of the windshield. The HUD device may also realize a 3D image without viewing fatigue by calculating the paths of light rays emitted from the display pixels and reflected by the windshield surface through the optical plate and then making additional ray rendering corrections for the left and right images.

Furthermore, the backlight unit ensures that the maximum exitance angle of the LED light source at the edge of the display panel is consistent with the FoV at the center of the eye box to maintain uniformity in the eye box area of the wide FoV HUD. This is achieved by gradually moving the relative position of each LED light source to the edge of each lens unit in the lens array, or by inserting a Fresnel lens into the top portion of the lens array to control the exitance angle of each LED light source.

In addition, the 3D AR HUD device may be configured in the form of a box with a dust cover further disposed on the upper portion of the 3D image display device, and an eye-tracking camera may be integrally mounted. The dust cover having the shape of a curved surface which does not directly face the driver, and may be changed to have a shape corresponding to the angle of the windshield. A case may be provided to cover the display device so that the display device is not directly visible to the driver.

**DESCRIPTION OF DRAWINGS**

FIG. 1 is a view illustrating the principle of realizing a virtual image using a transparent glass.

FIG. 2 is a configuration view of a conventional HUD device.

FIG. 3 is a schematic view illustrating the principle of realizing a 3D image display device.

FIG. 4 is a configuration view of a 3D AR HUD device according to the disclosure.

FIG. 5 is a configuration view of an embodiment of the 3D AR HUD device according to the disclosure.

FIG. 6 is a plan view of single display disposition of the 3D AR HUD device according to the disclosure.

FIG. 7 is a plan view of dual display disposition of the 3D AR HUD device according to the disclosure.

FIG. 8 is a plan view of the 3D AR HUD device according to the disclosure disposed in a dashboard.

FIG. 9 is a configuration view illustrating results of analysis of image distortion by adjusting the disposition angle of the 3D AR HUD device according to the disclosure.

FIG. 10 is a configuration view illustrating results of analysis of single display distortion correction of the 3D AR HUD device according to the disclosure.

FIG. 11 is a configuration view illustrating results of analysis of dual display distortion correction of the 3D AR HUD device according to the disclosure.

FIG. 12 is a configuration view illustrating a 3D image rendering method of the 3D AR HUD device according to the disclosure.

FIG. 13 is a configuration view of a light exitance angle of the backlight unit of the 3D AR HUD device according to the disclosure.

FIG. 14 is a configuration view of an embodiment of the backlight unit of the 3D AR HUD device according to the disclosure.

FIG. 15 illustrates the configuration and analysis of the backlight unit of the 3D AR HUD device according to the disclosure.

FIG. 16 is a view illustrating an analysis result in a case in which a single display is used.

FIG. 17 is a view illustrating an analysis result in a case in which two displays are used.

FIG. 18 is a configuration view of another embodiment of the backlight unit of the 3D AR HUD device according to the disclosure.

FIG. 19 is a configuration view of another embodiment of the 3D AR HUD device according to the disclosure.

FIG. 20 is a configuration view of another embodiment of the 3D AR HUD device according to the disclosure.

FIG. 21 is a configuration view of another embodiment of the 3D AR HUD device according to the disclosure.

## BEST MODE

Advantages and features of the disclosure, as well as methods of realizing the same, will be more clearly understood from the following detailed description of embodiments when taken in conjunction with the accompanying drawings. However, the disclosure is not limited to specific embodiments to be described hereinafter but should be understood as including a variety of modifications, equivalents, and alternatives within the spirit and scope of the disclosure. Rather, these embodiments are provided so that the description of the disclosure will be complete and will fully convey the scope of the disclosure to a person having ordinary skill in the art in the technical field to which the disclosure pertains. In the following description of the disclosure, a detailed description of related known technology will be omitted when the description may render the subject matter of the disclosure unclear.

The terminology used herein is for the purpose of describing particular embodiments only and is not intended to be limiting. As used herein, the singular forms are intended to include the plural forms as well, unless the context clearly indicates otherwise.

Terms, such as "comprise/include" or "have," or the like, as used herein, indicate that a feature, a number, a step, an operation, a component, a part or a combination thereof described in the disclosure is present, but do not preclude the possibility of the presence or addition of one or more other features, numbers, steps, operations, components, parts or combinations thereof in advance. Although terms, such as "first", "second", or the like, may be used to describe various components, these components should not be conceived of as being limited by these terms. These terms are only used to distinguish a component from another component.

Hereinafter, embodiments according to the disclosure will be described in detail with reference to the accompanying drawings, in which identical or similar components are given the same reference numerals, and repeated descriptions thereof will be omitted.

FIG. 4 is a configuration view of a three-dimensional (3D) augmented reality (AR) head-up display (HUD) device according to the disclosure.

The 3D AR HUD device 100 includes: a 3D image display device 10 including an LCD panel 20, an optical plate (e.g., a lenticular lens film or a parallax barrier film) 30 attached to the upper portion of the LCD panel 20, and a backlight unit 40 disposed under the LCD panel 20; and an eye-tracking camera 50 used to identify the positions of driver's eyes and accurately applying left and right images corresponding to the left and right eyes, respectively, to the 3D image display device 10.

The eye-tracking camera 50 may be provided integrally with the 3D image display device 10, or may be separately disposed in the dashboard of a vehicle in a position capable of detecting or facing toward the driver's eyes.

The backlight unit 40 may desirably be implemented as a high-brightness backlight having a divergence angle of less than 10 degrees so that the image is properly visible even under strong sunlight.

Because different models of vehicles use different shapes of windshield W, conventional HUD devices are fabricated differently in a responsive manner, but the display device of the disclosure may be universally applied to almost all types of vehicles.

In this regard, the HUD device 100 of the disclosure, which is disposed in the dashboard D at the bottom of the windshield W, may easily compensate for the distortion of an image by changing the disposition angle thereof according to the shape and angle of the windshield W.

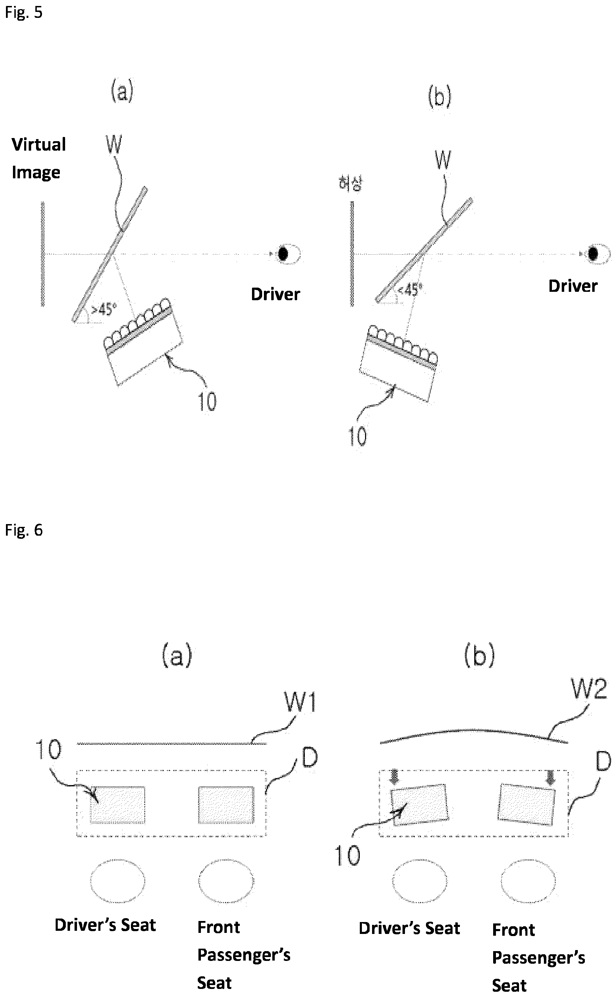

FIG. 5 (a) and (b) are schematic views of the disposition of a 3D AR HUD device according to the windshield angle of the disclosure.

It is required for the virtual image formed in front of the driver through the windshield W to be realized as a vertically oriented rectangular image, which is absolutely advantageous for obtaining image quality and uniformity. Because the virtual image is formed in a position symmetrical to the 3D image display device 10 with respect to the windshield W, in a case in which the angle of the windshield W is 45 degrees as shown in FIG. 4, the 3D image display device 10 may be disposed horizontally in the dashboard, but in a case in which the angle is greater than 45 degrees, the 3D image display device 10 should be disposed in a form inclined inwardly of the windshield W as shown in FIG. 5 (a).

In a case in which the angle of the windshield W is less than 45 degrees, the 3D image display device 10 should be disposed to be inclined outwardly of the windshield W, as shown in FIG. 5 (b).

The disposition of the 3D image display device 10 of the disclosure should also be changed according to the shape of the windshield W to obtain image quality by reducing image distortion. In the case of a flat windshield W1, the 3D image display device 10 of the disclosure may be disposed horizontally with respect to the flat windshield W1, as shown in FIG. 6 (a). In a case in which a curved windshield W2 is provided, the 3D image display device 10 may be disposed such that the left and right side portions thereof are rotated outwardly of the curved windshield W2, as shown in FIG. 6 (b). The 3D image display device 10 may also be disposed on the driver's seat, the front passenger's seat, or a portion between the driver's seat and the front passenger's seat.

The 3D AR HUD device 100 according to the disclosure may easily increase the field of view (FoV) of the display by increasing the size of the LCD panel 20 of the 3D image display device 10.

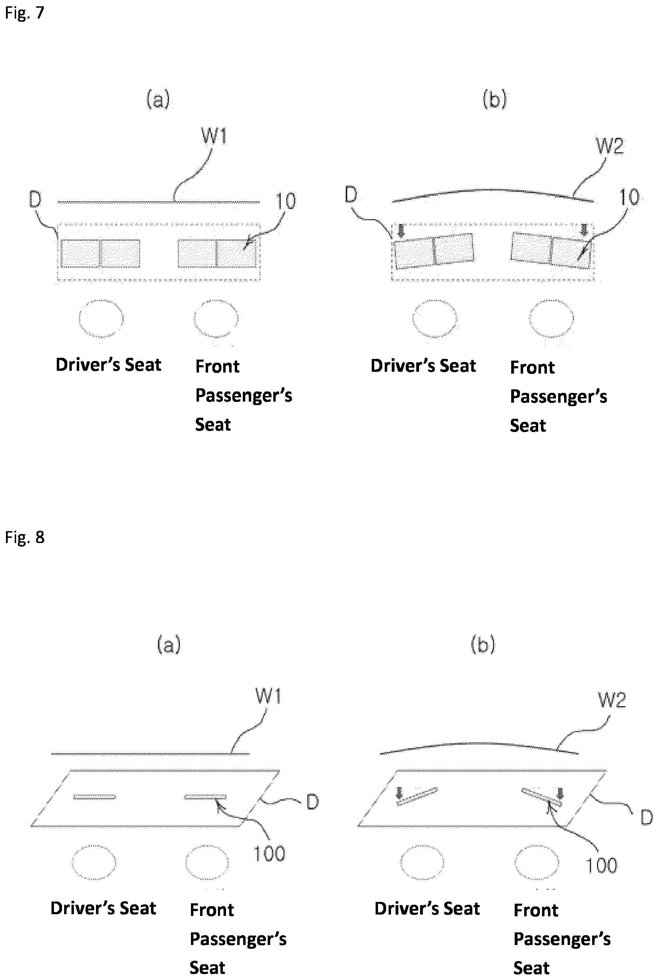

FIG. 7 (a) and (b) are embodiments of a case in which a display screen is expanded by using two LCD panels 20 of the 3D image display device 10. The same effect may also be achieved using a single panel by greatly increasing the aspect ratio of the LCD panel 20. In a case in which two LCD panels 20 are disposed to be connected to each other, the same disposition form (or angle adjustment) as in FIG. 6 may also be used in a corresponding manner. In addition, in a case in which a plurality of panels are used, the position and the angle of each panel may be adjusted according to the shape and the disposition location of the windshield.

In the case of a flat windshield W1, the HUD device 100 of the disclosure may be disposed horizontally in the dashboard D in a manner corresponding to the surface of the flat windshield W1 which faces the dashboard D, as shown in FIG. 8 (a). In a case in which a curved windshield W2 is provided, the HUD device 100 of the disclosure may be disposed in a form in which the outer portions of the HUD device 100 on the left and right sides are rotated in a vertical direction in a manner corresponding to the curved surface of the curved windshield W2 which faces the HUD device 100, as shown in FIG. 8 (b).

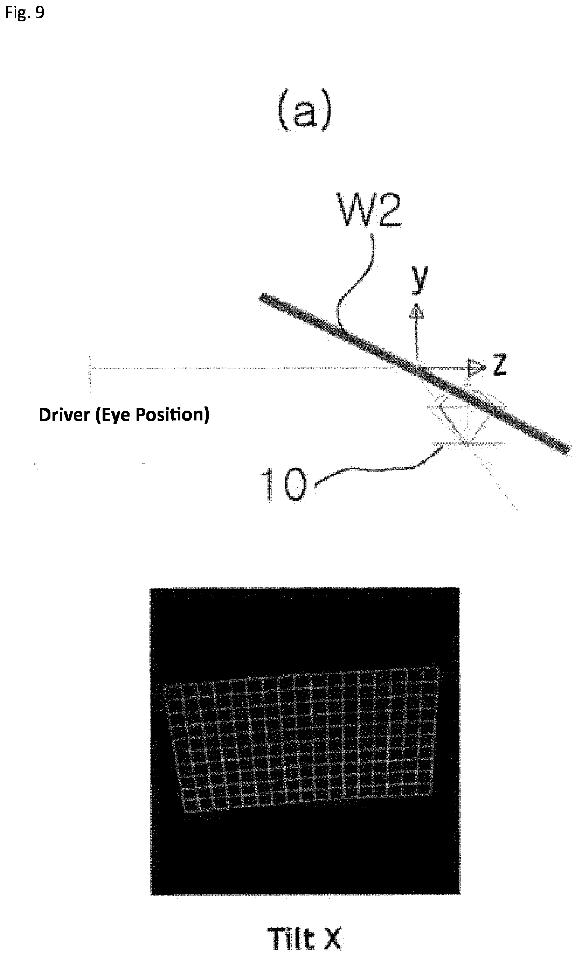

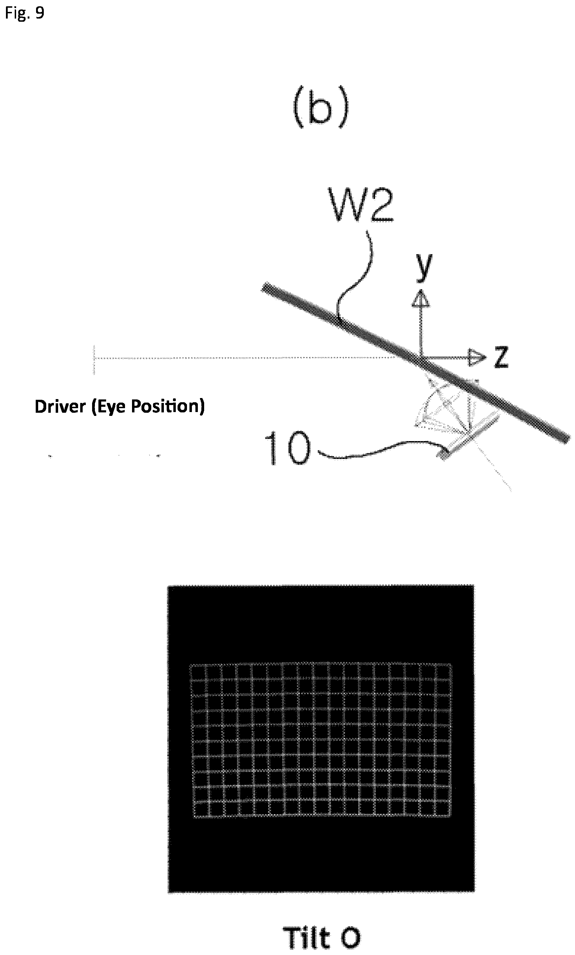

FIG. 9 (a) is a view illustrating a virtual image distorted due to the disposition angle adjustments of FIGS. 5, 6, and 8 on a 3D image display device 10 not reflected for a curved windshield W2 at an angle of 30 degrees, and FIG. 9 (b) is a view illustrating a distortion correction analysis result reflecting all of the disposition angle adjustments of FIGS. 5, 6, and 8 on a 3D image display device 10 for a curved windshield W2 at an angle of 30 degrees.

Here, it may be seen that in a case in which the disposition angle of the 3D image display device 10 is adjusted to -55.6 degrees, +3.9 degrees, and -1.9 degrees with respect to the frontal (X-axis) direction, the horizontal (Y-axis) direction, and the vertical (Z-axis) direction in FIG. 9 (a), respectively, the distortion of the virtual image may be greatly reduced as shown in (b) of FIG. 9. This analysis is based on the position in which the display surface of the 3D image display device 10 is vertically oriented as the reference point (0, 0, 0) and calculated with respect to the driver's position, and clockwise rotation is labeled + and counterclockwise rotation is labeled -.

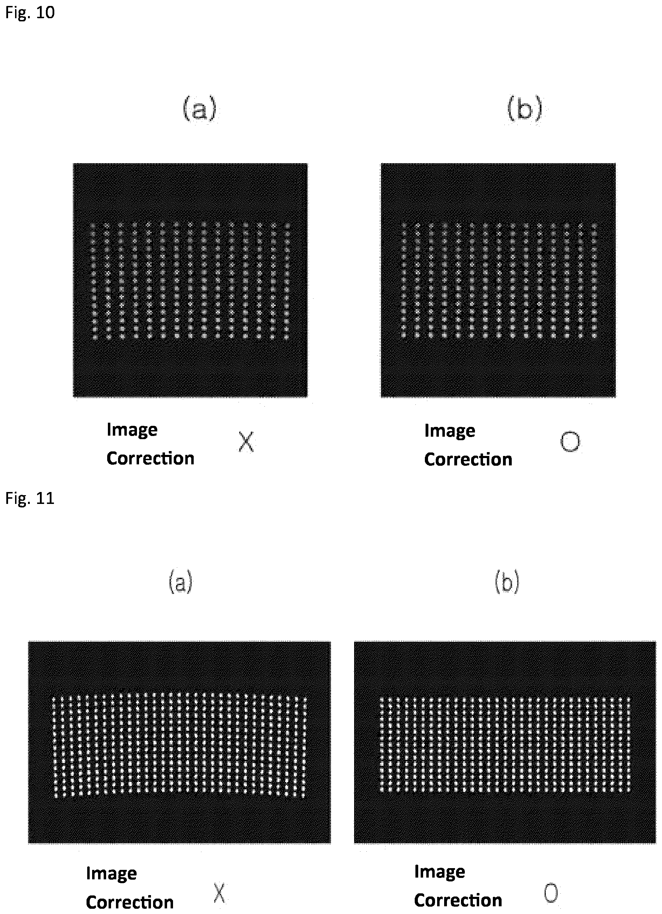

The distortion of the virtual image reduced by such adjustment of the disposition angle may be further reduced by correcting the input image. FIG. 10 (a) and (b) illustrate virtual image distortion before and after image correction, and FIG. 11 (a) and (b) illustrate virtual image distortion before and after additional input image correction when two LCD panels 20 of the 3D image display device 10 are disposed to be connected to each other.

In FIG. 10 (a) and FIG. 11 (a), some distortion remains in the virtual image improved by adjusting the disposition angle as shown in FIG. 9 (b), and with further image correction, the distortion may be corrected to have a perfect square shape as shown in FIG. 10 (b) and FIG. 11 (b).

Even in a case in which the two-dimensional (2D) image distortion is fully corrected as above, in the case of 3D images, additional rendering corrections for left and right images are required by calculating the paths of light beams emitted from the display pixels through the optical plate 30 and then striking and reflected by the surface of the windshield W.

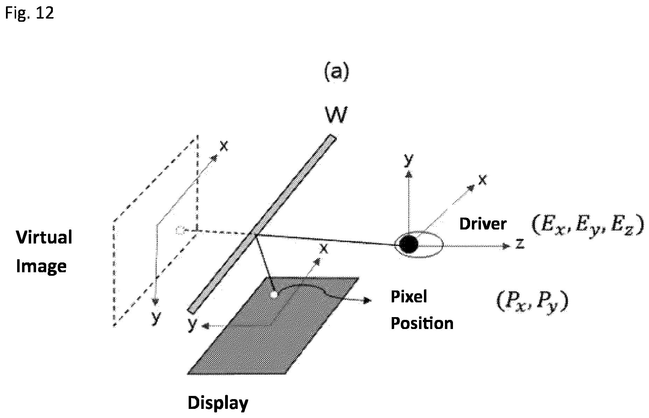

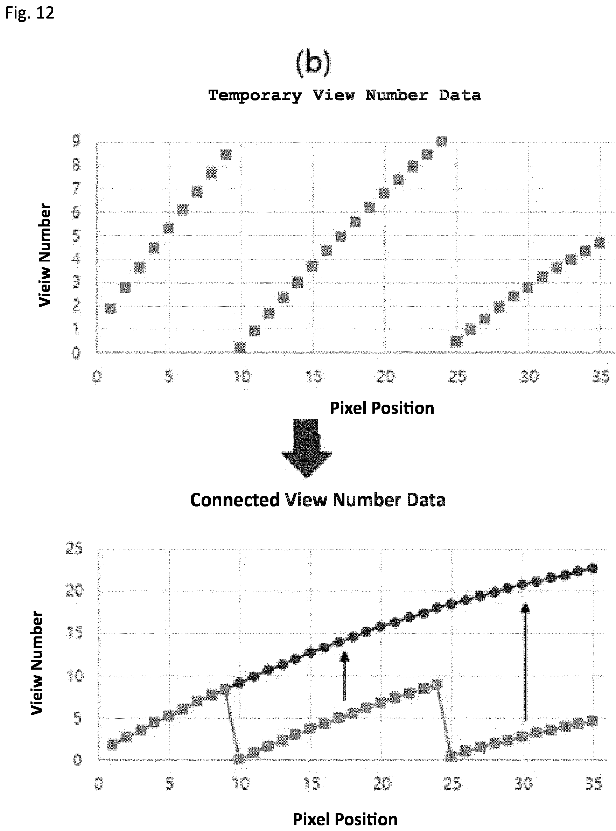

FIG. 12 illustrates a 3D image rendering method for a 3D AR HUD device according to the disclosure, which may be used to realize 3D images without viewing fatigue.

The path of a beam is determined by the position of the display pixel (Px, Py), which is the origin of the beam, and the coordinates (Ex, Ey, Ez) of the driver's 3D eye position, which is the destination of the beam. Therefore, it is possible to determine which beam path is the most appropriate in each pixel position by determining several display pixel positions (Px, Py) and the coordinates (Ex, Ey, Ez) of the driver's 3D eye position as shown in FIG. 12 (a) and applying and analyzing a view pattern image in which the beam path is determined. As a result, a polynomial model (polynomial coefficients) having the driver's 3D eye position coordinates and the display pixel positions (Ex, Ey, Ez, Px, Py) as inputs and the beam paths represented by view numbers as outputs may be obtained. Therefore, the obtained multivariate polynomial may be used to calculate the exact path for successive eye positions and pixel positions to render 3D images.

In addition, to obtain an appropriate polynomial model, an operation of linearly stretching the periodic view numbers with respect to eye coordinates and pixel positions is necessary, as shown in FIG. 12 (b), before performing the polynomial regression. This is accomplished by moving data of discontinuous sections upward and splicing the data together.

In 3D displays, a view refers to a partial image with the same parallax, and a plurality of views having different parallaxes (i.e., different optical paths) are combined to form a complete 3D image. The view number of each pixel, which corresponds to the number of views, typically has a selected periodicity. The view pattern may be configured in a variety of manners, and correcting the 3D image rendering of the disclosure refers to observing and compensating for changes in the view pattern in the image (i.e., the virtual image) which is displayed after being reflected by the surface of the windshield W.

In another example, the paths of light beams may not be calculated as polynomials, but a look-up table may be constructed to interpolate a value therebetween.

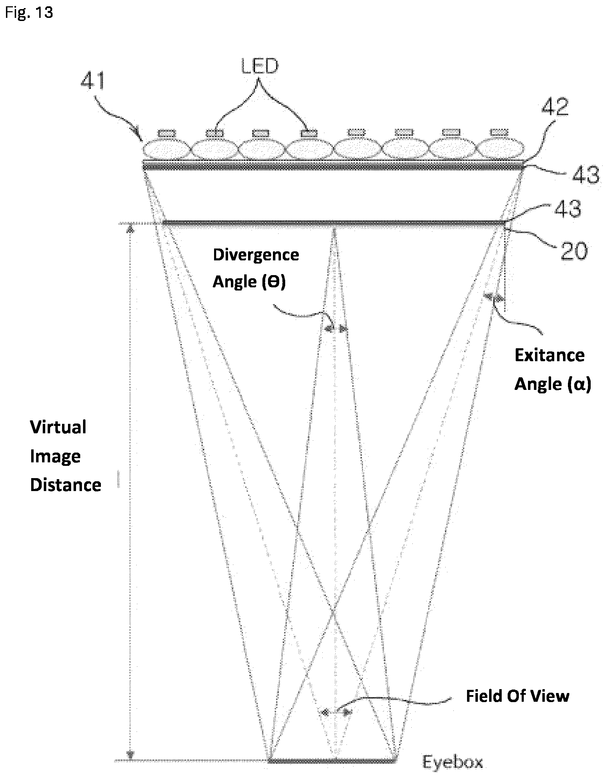

FIG. 13 is a view illustrating the configuration and the light exitance angle of the backlight unit of the 3D AR HUD device according to the disclosure.

The backlight unit 40 according to the disclosure is designed to achieve a target brightness and uniformity in the viewing area of the image, i.e., the eye box area. The divergence angle θ of the backlight unit 40 required to effectively gather light to the eye box area may be calculated as shown in Formula 1.

$$[\text{Formula 1}]$$
$$\theta = 2 * tan^{-1}\left(\frac{Eyebox\ size}{2*VID}\right)$$

Here, the eye box size is the dimension of the area that is visible to the driver when the driver moves in the horizontal and vertical directions, and the virtual image distance (VID) is the sum of the distance from the 3D image display device 10 to the windshield W and the distance from the windshield W to the eye box (i.e., the position of the driver's eye) (see FIG. 1).

The divergence angle θ of the backlight unit 40 as described above may typically be achieved using one or two collimating lens arrays 41 provided in the same number as the LEDs used as light sources.

Furthermore, to maintain the uniformity of the image in the eye box of the 3D image display device 10, it is necessary to additionally control the exitance angle of each LED light source, and the exitance angle α to the center of the eye box may be calculated as shown in Formula 2.

$$[\text{Formula 2}]$$
$$\alpha = tan^{-1}\left(\frac{Panel\ position}{2*VID}\right)$$

Here, the panel position is the spatial location in the display panel in the horizontal and vertical directions. In summary, the maximum exitance angle of the LED light source at the edge of the display is required to match the FoV at the center of the eye box. In addition, the edge of the eye box may be understood as being covered by the divergence angle of the LED light source.

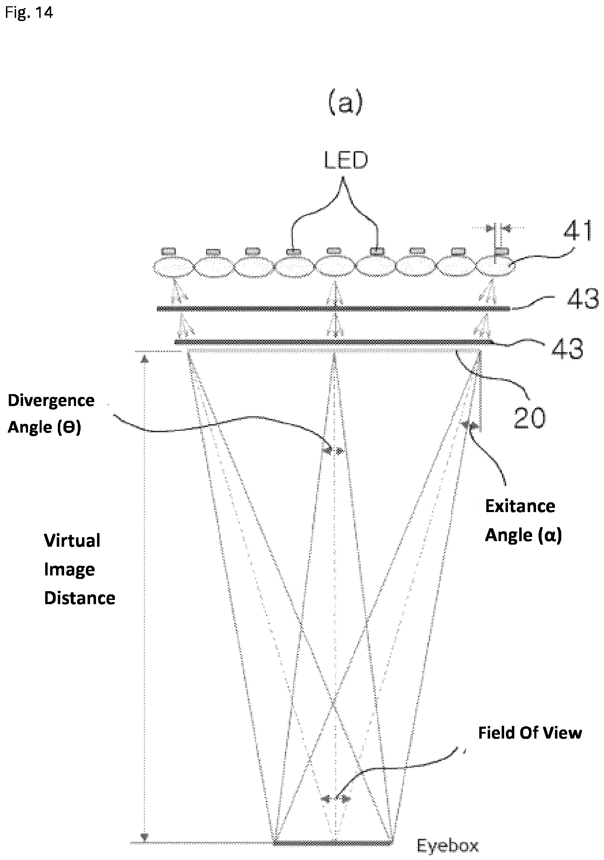

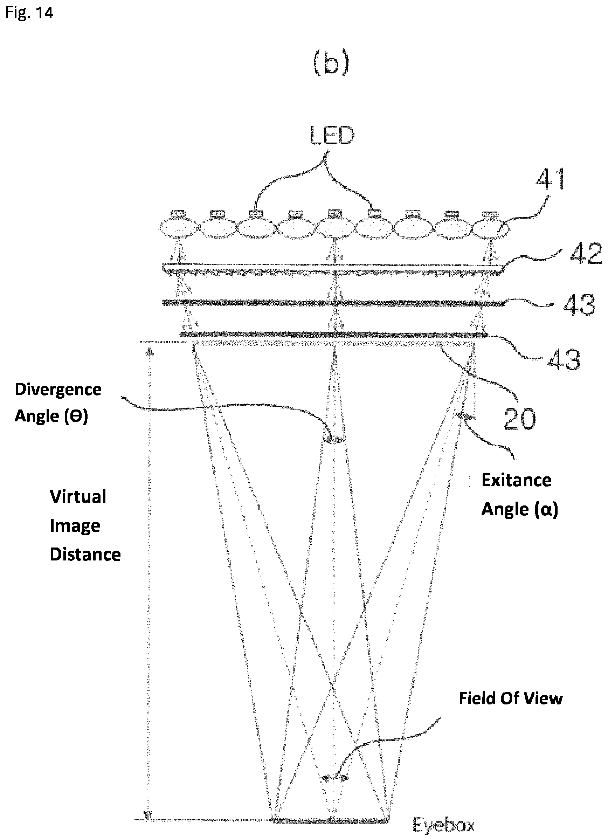

In this regard, in the disclosure, the relative position of each of the LED light sources for each of the lens units in the lens array 41 may be arranged by gradually shifting from the center to the outer edges, as shown in FIG. 14 (a) or by inserting a Fresnel lens 42 into the top portion of the lens array 41 to control the exitance angle of light toward the center, as shown in FIG. 14 (b). Here, the focal length of the Fresnel lens 42 may be desirably maintained the same as the virtual image distance (VID).

In addition, diffusers 43 may be further disposed over the Fresnel lens 42 and under the LCD panel to improve the uniformity of the image.

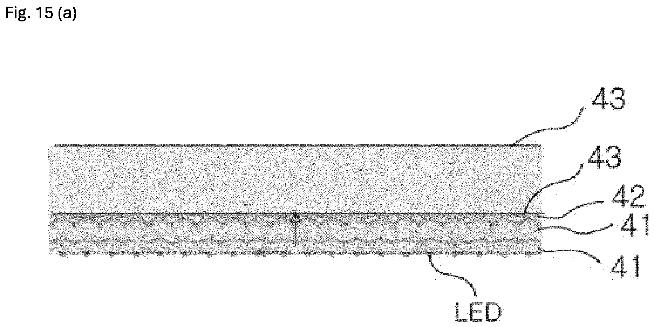

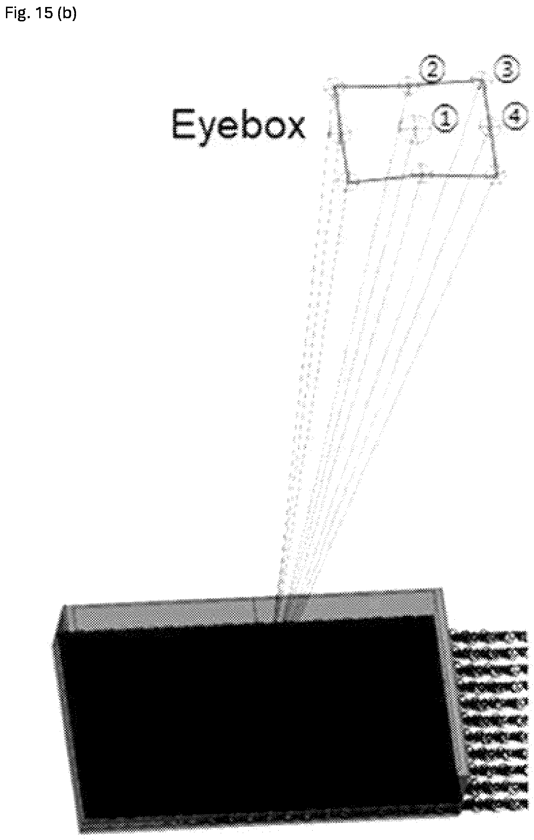

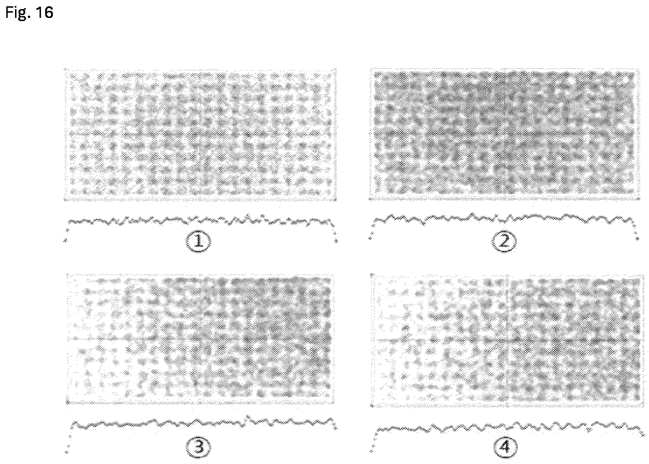

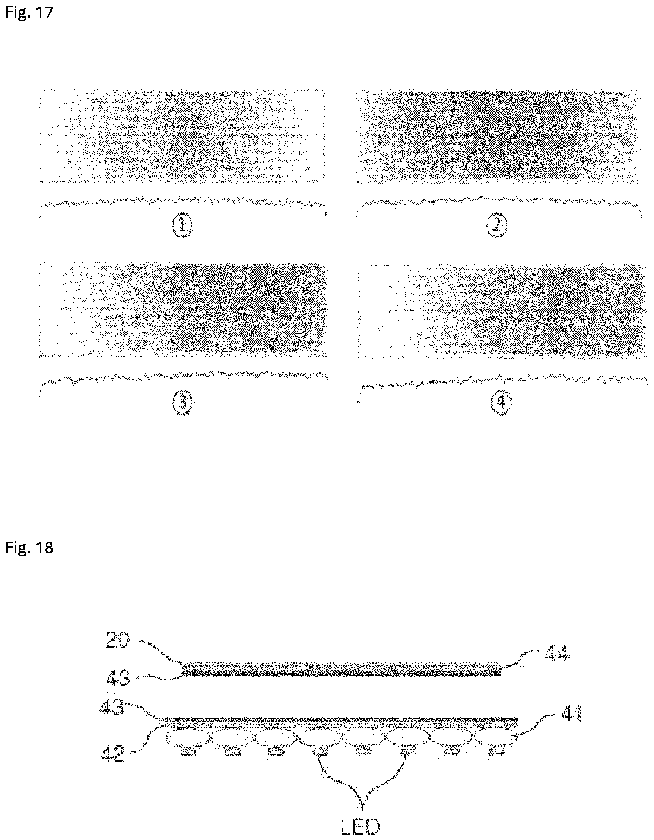

FIG. 15 is a configuration view of the backlight unit in the 3D AR HUD device according to the disclosure, FIG. 16 is a view illustrating an analysis result in a case in which a single display is used, and FIG. 17 is a view illustrating an analysis result in a case in which two displays are used. It may be seen that the target luminance and uniformity may be obtained at the center ①, edge ② and ④, and corner ③ positions in the eye box area.

In addition, an angle control film 44, such as a privacy film, may optionally be disposed between the LCD panel 20 and the diffuser plate 43 for stray light control, as shown in FIG. 18.

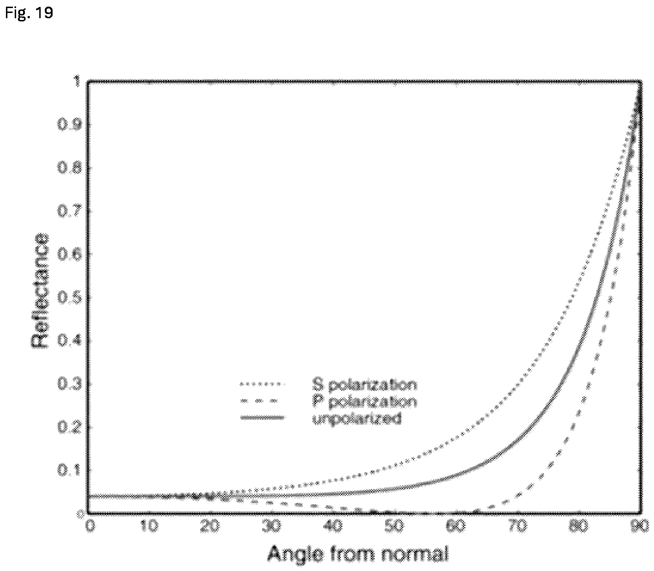

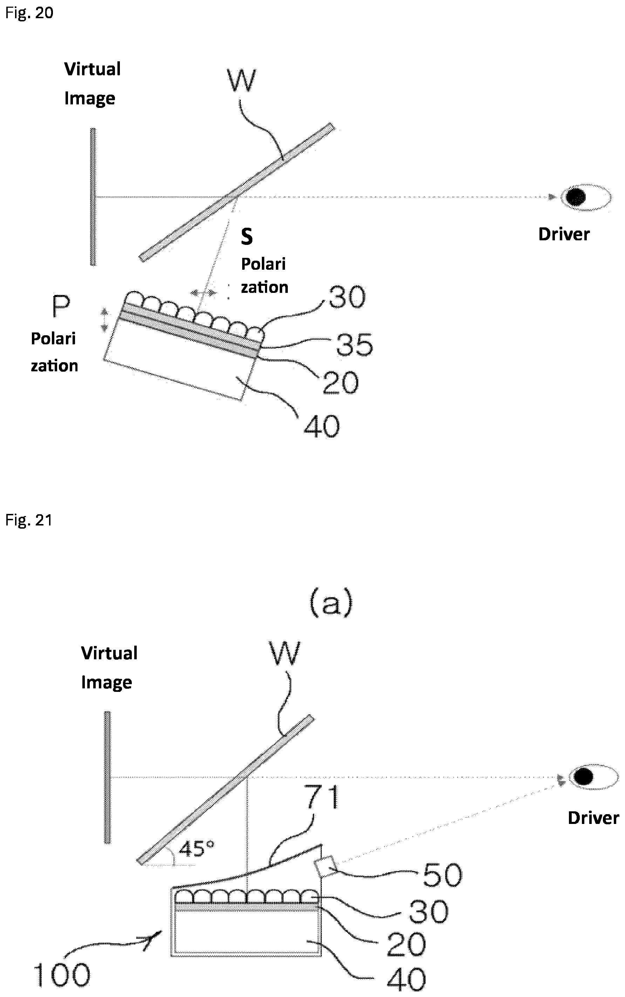

FIG. 19 and FIG. 20 are other embodiments of the 3D AR HUD device configuration according to the disclosure.

The brightness of the virtual image viewed by the driver is equal to the brightness of the display reflected by the windshield W. However, the amount of reflected light depends on the polarization direction of the display and the angle of incidence on the windshield, as shown in FIG. 19. The polarization direction of the cloud display varies depending on the panel manufacturer. In a case in which the display is P-polarized and the windshield angle is 30 degrees (the angle of incidence on the windshield is 60 degrees from the normal), the brightness of the image viewed by the driver may be very low.

Therefore, in this case, a half-wave plate 35 is required to be inserted between the optical plate 30 and the LCD panel 20 to turn the polarization direction 90 degrees. The optical plate 30 and the half-wave plate 35 may be joined by a lamination process.

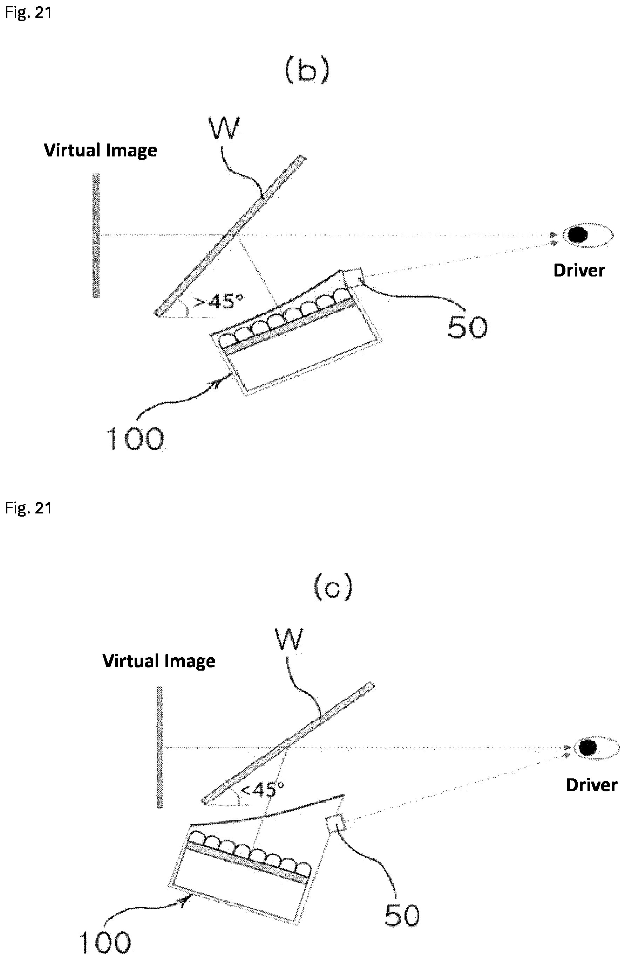

The 3D AR HUD device may further include a dust cover 71 on the upper portion of the 3D image display device 10, as shown in FIG. 21, and may be configured in the form of a box including the dust cover 71. The eye-tracking camera 50 may be integrally mounted.

Furthermore, the dust cover 71 may have a curved surface shape which does not directly face the driver, with the shape of the dust cover 71 being changeable in response to the angle of the windshield W. A case may be provided in a form that covers the display so that the display is not directly visible to the driver.

In addition, FIG. 21 (a) illustrates a case in which the angle of the windshield is 45 degrees, FIG. 21 (b) illustrates a case in which the angle of the windshield is 45 degrees or more, and FIG. 21 (c) illustrates a case in which the angle of the windshield is 45 degrees or less.

In addition, the display of the 3D image display device 10 of the disclosure may be implemented using another display panel capable of realizing a large flat panel display, such as an LCoS panel, an OLED panel, or a DLP panel, instead of the above LCD panel.

Therefore, the spirit of the disclosure shall not be limited to the above-described embodiments, and the entire scope of the appended claims and equivalents thereof will fall within the scope and spirit of the disclosure.

<Description of Reference Numerals of Drawings>

| 10: | 3D image display | 20: | LCD panel |
|-----|------------------|-----|-----------|
| 30: | optical plate | 35: | half-wave plate |
| 40: | backlight unit | 41: | lens array |
| 42: | Fresnel lens | 43: | diffuser |
| 44: | angle control film | 50: | eye-tracking camera |
| 71: | dust cover | 100: | HUD device |
| W: | windshield | D: | dashboard |
| $\alpha$: | exitance angle | $\theta$: | divergence angle |

**Claims**

1. A three-dimensional augmented reality head-up display device comprising:

   a three-dimensional image display device comprising an LCD panel, an optical plate attached to an upper portion of the LCD panel, and a backlight unit disposed under the LCD panel; and
   an eye-tracking camera disposed in a direction facing toward a driver.

2. The three-dimensional augmented reality head-up display device of claim 1, wherein the eye-tracking camera is disposed in a dashboard of a vehicle in a position facing toward eyes of the driver and separated from the three-dimensional image display device.

3. The three-dimensional augmented reality head-up display device of claim 1, wherein the backlight unit comprises an LED, a collimating lens array, and a diffuser, and is configured such that a maximum exitance angle of an LED light source at an edge of a display matches a field of view at a center of an eye box.

4. The three-dimensional augmented reality head-up display device of claim 3, wherein the backlight unit is disposed such that a relative position of each of the LED light sources with respect to a corresponding lens unit is gradually shifted from the center to an edge.

5. The three-dimensional augmented reality head-up display device of claim 3, wherein the backlight unit is configured such that a Fresnel lens is inserted into a top portion of the lens array.

6. The three-dimensional augmented reality head-up display device of claim 5, wherein a focal length of the Fresnel lens is equal to a virtual image distance.

7. The three-dimensional augmented reality head-up display device of claim 3, wherein in the backlight unit, an angle control film is disposed between the LCD panel and the diffuser.

8. The three-dimensional augmented reality head-up display device of claim 1, wherein in the three-dimensional image display device, a half-wave plate is disposed and joined between the optical plate and the LCD panel.

9. The three-dimensional augmented reality head-up display device of claim 1, wherein the three-dimensional image display device has a box shape, with a dust cover being disposed on a top portion of the three-dimensional image display device.

10. The three-dimensional augmented reality head-up display device of claim 9, wherein the dust cover has a curved surface shape which does not directly face the driver and is disposed in response to an angle of a windshield.

11. The three-dimensional augmented reality head-up display device of claim 1, wherein the three-dimensional image display device comprises a case configured to cover a display so that the display is not directly visible to the driver.

12. The three-dimensional augmented reality head-up display device of claim 1, wherein the three-dimensional image display device is configured such that the at least two LCD panels are connected.

13. The three-dimensional augmented reality head-up display device of claim 1, wherein the three-dimensional image display device is disposed on at least one of a driver's seat, a front passenger's seat, or a portion between the driver's seat and the front passenger's seat.

14. The three-dimensional augmented reality head-up display device of claim 1, wherein the three-dimensional image display device is configured such that a disposition position and a disposition angle thereof are adjustable in response to an angle and a shape of a windshield to realize a virtual image as a vertically oriented rectangular image.

15. The three-dimensional augmented reality head-up display device of claim 1 or 14, wherein the three-dimensional image display device is configured such that a display is disposed horizontally in a dashboard in a case in which a flat windshield is disposed at an angle of 45 degrees.

16. The three-dimensional augmented reality head-up display device of claim 1 or 14, wherein the three-dimensional image display device is configured such that a display is inclined inwardly of a surface of a flat windshield in a case in which an angle of the flat windshield is greater than 45 degrees.

17. The three-dimensional augmented reality head-up display device of claim 1 or 14, wherein the three-dimensional image display device is configured such that a display is inclined outwardly of a surface of a flat windshield in a case in which an angle of the flat windshield is less than 45 degrees.

18. The three-dimensional augmented reality head-up display device of claim 1 or 14, wherein the three-dimensional image display device is configured such that left and right side portions of a display are disposed rotated outwardly of a surface of a curved windshield.

19. The three-dimensional augmented reality head-up display device of claim 1 or 14, wherein the three-dimensional image display device is configured such that left and right side portions of a display are rotated vertically in a case in which a curved windshield is provided.

20. The three-dimensional augmented reality head-up display device of claim 1 or 14, wherein the three-dimensional image display device is configured such that a display is inclined inwardly of a surface of a curved windshield in a case in which an angle of the curved windshield is greater than 45 degrees.

21. The three-dimensional augmented reality head-up display device of claim 1 or 14, wherein the three-dimensional image display device is configured such that left and right side portions of a display are inclined outwardly of a surface of a curved windshield in a case in which an angle of the curved windshield is less than 45 degrees.

22. The three-dimensional augmented reality head-up display device of claim 1 or 14, wherein the three-dimensional image display device is configured to correct an input image to realize a virtual image as a vertically oriented rectangular image.

23. The three-dimensional augmented reality head-up display device of claim 1 or 14, wherein the three-dimensional image display device is configured for further rendering correction for left and right images by calculating paths of light beams emitted from pixels of the LCD panel through the optical plate and striking and reflected by a surface of a windshield.

24. The three-dimensional augmented reality head-up display device of claim 1 or 14, wherein the three-dimensional image display device is configured to render three-dimensional images by calculating exact paths for successive eye positions and display pixel positions using a polynomial model having three-dimensional eye position coordinates of the driver and the display pixel positions as inputs and beam paths represented by view numbers as outputs.

25. The three-dimensional augmented reality head-up display device of claim 1 or 14, wherein the three-dimensional image display device is configured such that paths of light beams are calculated by constructing a look-up table calculate and interpolating a value therebetween.

26. The three-dimensional augmented reality head-up display device of claim 1 or 14, wherein the three-dimensional image display device is configured such that in a case in which at least two LCD panels are used, a position and an angle of each of the LCD panels are adjustable according to a shape and a disposition location of a windshield.

Fig. 1

Virtual Image

W

Driver

Display

Fig. 2

W

Virtual Image

HUD

Optical
Mirror

Optical Mirror

Picture Generation Unit (PGU)

Fig. 3

**Optical Plate**

**2D panel**

**Left/Right Eyes**

Fig. 4

**Virtual Image**

**Driver**

Fig. 5

(a)

(b)

**Virtual Image** W

>45°

10

Driver

허상 W

<45°

10

Driver

Fig. 6

(a)

(b)

W1

10 D

Driver's Seat

Front Passenger's Seat

W2

10 D

Driver's Seat

Front Passenger's Seat

Fig. 7

(a)

W1

D

10

Driver's Seat Front
Passenger's
Seat

(b)

W2

D

10

Driver's Seat Front
Passenger's
Seat

Fig. 8

(a)

W1

D

100

Driver's Seat Front
Passenger's
Seat

(b)

W2

D

100

Driver's Seat Front
Passenger's
Seat

Fig. 9

(a)

Driver (Eye Position)

W2

y

z

10

Tilt X

Fig. 9

(b)

W2

y

z

Driver (Eye Position)

10

Tilt O

Fig. 10

(a)

(b)

Image Correction X

Image Correction O

Fig. 11

(a)

(b)

Image Correction X

Image Correction O

Fig. 12

(a)

W

Virtual
Image

Driver $(E_x, E_y, E_z)$

Pixel
Position $(P_x, P_y)$

Display

Fig. 12

**(b)**

Temporary View Number Data

Connected View Number Data

Fig. 13

Fig. 14

(a)

LED

41

43

43

20

Divergence
Angle (Θ)

Exitance
Angle (α)

Virtual
Image
Distance

Field Of View

Eyebox

Fig. 14

(b)

LED

41

42

43

43

20

**Divergence Angle (θ)**

**Virtual Image Distance**

**Exitance Angle (α)**

**Field Of View**

Eyebox

Fig. 15 (a)

Fig. 15 (b)

Eyebox

Fig. 16

Fig. 17

Fig. 18

Fig. 19

Fig. 20

**Virtual Image**

W

**Driver**

S
**Polari zation**

30

35

20

40

P
**Polari zation**

Fig. 21

## (a)

**Virtual Image**

W

**Driver**

45°

71

50

30

20

40

100

Fig. 21

(b)

Virtual Image

W

>45°

Driver

50

100

Fig. 21

(c)

Virtual Image

W

<45°

Driver

50

100

## INTERNATIONAL SEARCH REPORT

International application No.

**PCT/KR2023/014123**

### A. CLASSIFICATION OF SUBJECT MATTER

**G02B 27/00**(2006.01)i; **G06T 19/00**(2011.01)i; **G06T 15/00**(2006.01)i; **G06V 40/18**(2022.01)i; **G02B 30/00**(2020.01)i; **B60K 35/00**(2006.01)i; **G02B 27/01**(2006.01)i

According to International Patent Classification (IPC) or to both national classification and IPC

### B. FIELDS SEARCHED

Minimum documentation searched (classification system followed by classification symbols)

G02B 27/00(2006.01); G02B 27/01(2006.01); G02B 27/28(2006.01); G02B 30/00(2020.01); G02B 30/27(2020.01); G09G 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: LCD, 헤드업(head up), 3차원(3dimension), 눈추적(eye tracking)

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0006892 A (HARMAN INTERNATIONAL INDUSTRIES, INCORPORATED) 19 January 2021 (2021-01-19)<br>See paragraphs [0009]-[0036] and figures 1-5. | 1-26 |
| A | KR 10-2015-0093353 A (LG ELECTRONICS INC.) 18 August 2015 (2015-08-18)<br>See paragraphs [0026]-[0047] and figures 1-8. | 1-26 |
| A | KR 10-2020-0039527 A (SAMSUNG ELECTRONICS CO., LTD.) 16 April 2020 (2020-04-16)<br>See paragraphs [0033]-[0074] and figures 1-8. | 1-26 |
| A | JP 2021-060564 A (DENSO CORP.) 15 April 2021 (2021-04-15)<br>See paragraphs [0025]-[0143] and figures 1-18. | 1-26 |
| A | US 2020-0201036 A1 (BOE TECHNOLOGY GROUP CO., LTD.) 25 June 2020 (2020-06-25)<br>See paragraphs [0009]-[0141] and figures 1-9. | 1-26 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 December 2023** | **15 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2023/014123** |

| Patent document cited in search report | | | Publication date (day/month/year) | Patent family member(s) | | | Publication date (day/month/year) |
| --- | --- | --- | --- | --- | --- | --- | --- |
| KR | 10-2021-0006892 | A | 19 January 2021 | CN | 112074770 | A | 11 December 2020 |
| | | | | CN | 112074770 | B | 22 August 2023 |
| | | | | CN | 112074774 | A | 11 December 2020 |
| | | | | CN | 112088329 | A | 15 December 2020 |
| | | | | CN | 112088329 | B | 02 December 2022 |
| | | | | CN | 112105982 | A | 18 December 2020 |
| | | | | EP | 3788429 | A1 | 10 March 2021 |
| | | | | EP | 3788430 | A1 | 10 March 2021 |
| | | | | EP | 3788431 | A1 | 10 March 2021 |
| | | | | EP | 3788432 | A1 | 10 March 2021 |
| | | | | JP | 2021-522534 | A | 30 August 2021 |
| | | | | JP | 2021-523394 | A | 02 September 2021 |
| | | | | JP | 2021-523396 | A | 02 September 2021 |
| | | | | JP | 2021-523595 | A | 02 September 2021 |
| | | | | JP | 7301880 | B2 | 03 July 2023 |
| | | | | JP | 7319292 | B2 | 01 August 2023 |
| | | | | JP | 7324232 | B2 | 09 August 2023 |
| | | | | KR | 10-2021-0003131 | A | 11 January 2021 |
| | | | | KR | 10-2021-0006893 | A | 19 January 2021 |
| | | | | KR | 10-2021-0006894 | A | 19 January 2021 |
| | | | | US | 11287651 | B2 | 29 March 2022 |
| | | | | US | 2021-0055547 | A1 | 25 February 2021 |
| | | | | US | 2021-0055548 | A1 | 25 February 2021 |
| | | | | US | 2021-0070176 | A1 | 11 March 2021 |
| | | | | US | 2021-0132377 | A1 | 06 May 2021 |
| | | | | WO | 2019-212633 | A1 | 07 November 2019 |
| | | | | WO | 2019-212634 | A1 | 07 November 2019 |
| | | | | WO | 2019-212635 | A1 | 07 November 2019 |
| | | | | WO | 2019-212636 | A1 | 07 November 2019 |
| KR | 10-2015-0093353 | A | 18 August 2015 | CN | 104827967 | A | 12 August 2015 |
| | | | | CN | 104827967 | B | 22 August 2017 |
| | | | | EP | 2905649 | A1 | 12 August 2015 |
| | | | | EP | 2905649 | B1 | 07 August 2019 |
| | | | | KR | 10-2071693 | B1 | 30 January 2020 |
| | | | | US | 2015-0226965 | A1 | 13 August 2015 |
| | | | | US | 9678341 | B2 | 13 June 2017 |
| KR | 10-2020-0039527 | A | 16 April 2020 | CN | 111007684 | A | 14 April 2020 |
| | | | | EP | 3633439 | A1 | 08 April 2020 |
| | | | | JP | 2020-076969 | A | 21 May 2020 |
| | | | | US | 11181742 | B2 | 23 November 2021 |
| | | | | US | 2020-0110266 | A1 | 09 April 2020 |
| JP | 2021-060564 | A | 15 April 2021 | JP | 7276062 | B2 | 18 May 2023 |
| US | 2020-0201036 | A1 | 25 June 2020 | CN | 109143576 | A | 04 January 2019 |
| | | | | CN | 109143576 | B | 22 January 2021 |
| | | | | EP | 3647117 | A1 | 06 May 2020 |
| | | | | US | 11415799 | B2 | 16 August 2022 |
| | | | | WO | 2019-001004 | A1 | 03 January 2019 |

Form PCT/ISA/210 (patent family annex) (July 2022)